(19) Europäisches Patentamt
European Patent Office
Office européen des brevets

(11) Veröffentlichungsnummer: **0 319 673 B1**

# EUROPÄISCHE PATENTSCHRIFT

(12)

(45) Veröffentlichungstag der Patentschrift:
**18.09.91 Patentblatt 91/38**

(51) Int. Cl.$^5$: **F24C 15/00, A21B 3/04, A21C 13/00, A47J 27/16, A47J 39/00**

(21) Anmeldenummer: **88116915.5**

(22) Anmeldetag: **12.10.88**

(54) **Vorrichtung zur Steuerung eines mit Dampf betriebenen Gargerätes und Verfahren zum Betreiben eines solchen Gerätes.**

(30) Priorität: **11.12.87 DE 3741975**

(43) Veröffentlichungstag der Anmeldung:
**14.06.89 Patentblatt 89/24**

(45) Bekanntmachung des Hinweises auf die Patenterteilung:
**18.09.91 Patentblatt 91/38**

(84) Benannte Vertragsstaaten:
**AT CH DE FR GB IT LI NL SE**

(56) Entgegenhaltungen:
**EP-A- 0 154 595**
**EP-A- 0 279 065**
**DE-A- 3 027 566**
**DE-U- 8 701 431**

(73) Patentinhaber: **Electrolux-Juno Küchentechnik GmbH**
**Junostrasse Postfach 1160**
**W-6348 Herborn (DE)**

(72) Erfinder: **Plücker, Eugen**
**Fritz-Jung-Strasse 12**
**W-6348 Herborn (DE)**
Erfinder: **Merz, Heinrich**
**Steintal 10**
**W-6348 Herborn-Seelbach (DE)**
Erfinder: **Dietrich, Wilfried**
**Austrasse 17**
**W-6349 Eisemroth (DE)**
Erfinder: **Lubbe, Karlheinz**
**Mittelstrasse 34**
**W-6348 Herborn-Seelbach (DE)**

(74) Vertreter: **Grosse, Wolfgang et al**
**Patentanwälte Herrmann-Trentepohl, Kirschner Grosse, Bockhorni & Partner**
**Forstenrieder Allee 59**
**W-8000 München 71 (DE)**

## Beschreibung

Die Erfindung betrifft eine Vorrichtung zur Steuerung eines mit Dampf betriebenen Gargerätes, insbesondere eines mit einem beheizten Sattdampferzeuger versehenen Backofens, und ein Verfahren zum Betreiben eines derartigen Gargerätes. Es ist bekannt (DE-OS 3443477) ein Gargerät neben dem Betrieb mit umgewälzter Heißluft auch mit Wasserdampf zu betreiben, indem über einen beheizten Dampferzeuger Wasserdampf dem Garraum zugeführt wird.

Weiterhin ist durch die DE-U-8701431 ein Gargerät mit in den Garraum eintretenden Wasserdampf bekannt, bei welchem der durch eine Öffnung in der Backofendecke austretende Wasserdampf über eine Rückführleitung in den Unterdruckbereich eines Gebläses geleitet und über einen Luftkanal abgeleitet wird Ein Problem bei derartigen Geräten besteht darin, die Dampferzeugung so zu steuern, daß einerseits die Dampfmenge im Garraum ausreicht, andererseits aber der sichtbare Dampfaustritt bei Betrieb des Gerätes vermieden wird. Der Erfindung liegt die Aufgabe zugrunde, ein solches Gargerät so zu verbessern, daß beim Öffnen der Backofentür kein störender Dampf austritt.

Zur Lösung dieser Aufgabe werden die im Patentanspruch 1 angegebenen Merkmale vorgeschlagen.

Die beanspruchte Steuerung der verschiedenen Öffnungen ermöglicht es den Dampf vor seinem Austritt so abzubauen, daß er nicht mehr bei der Bedienung des Gerätes stört.

In der Zeichnung ist die Erfindung an einem Ausführungsbeispiel dargestellt. Es zeigen :

Fig. 1    den senkrechten Schnitt durch ein Gargerät
Fig. 2    die Draufsicht auf den Luftkanal des Zwangsluftstromes

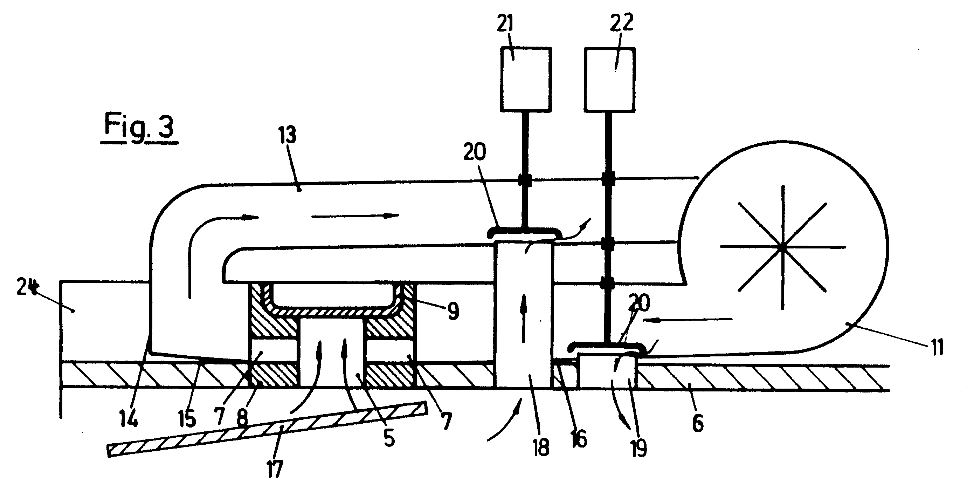

Fig. 3    einen Schnitt durch den Luftkanal des Zwangsluftstromes und des Temperatur-Fühlers entlang der Linie A-A gemäß Fig. 2.

Im Boden 1 der Garraummuffel 2 ist ein mit Wasser befüllbarer Topf 3 eingelassen, welcher bei Beheizung durch z.B. elektrische Heizelemente 4 Dampf erzeugt. Der Dampf tritt in den Garraum ein, und sobald die gesamte Muffel mit Dampf gefüllt ist, tritt überschüssiger Dampf durch eine Öffnung 5 in der Backofendecke 6 aus. Im Bereich der Auslaßöffnung 5 ist eine mit seitlichen Öffnungen 7 versehene Hülse 8 vorgesehen, welche den Temperaturfühler 9 trägt. Die Öffnungen 7 der Hülse 8 liegen in einem Luftkanal 10, durch welchen ein von dem Gebläse 11 erzeugter Zwangsluftstrom bis zur Vorderseite des Gerätes geführt wird, wo er oberhalb der Tür 12 austritt. Der Zwangsluftstrom beeinflußt auch den aus der Auslaßöffnung 5 zunächst in geringer Menge einströmenden Dampf. Erst bei genügend hohem Dampfüberschuß kann deshalb der Dampf den Temperaturfühler so beeinflussen, daß die Beheizung des Dampferzeugers reduziert oder abgeschaltet wird.

Sobald durch die reduzierte Beheizung des Dampferzeugers die Dampfmenge absinkt, wird der Dampf bald den Temperaturfühler nicht mehr erreichen. Jetzt sorgt der Zwangsluftstrom für eine schnelle zusätzliche Abkühlung der Hülse 8 und des Fühlers 9. Es wird somit eine schnelle Anpassung an die jeweilige Anforderung erreicht.

Um die Kondensation des durch die Auslaßöffnung 5 austretenden Wasserdampfes im Bereich der Herdvorderseite zu vermeiden, ist eine Rückführleitung 13 vorgesehen, durch welche der austretende Wasserdampf bis in den Unterdruckbereich des Gebläses 11 geleitet wird und dort mit der übrigen vom Gebläse angesaugten Kühlluft vermischt und mit dieser über den sich zur Gerätevorderseite hin verbreiternden Luftkanal 10 abgeleitet wird.

Kondensat, das sich im Luftkanal 10 bildet, kann durch das allseitige Gefälle des Luftkanals 10 zur Hülse ablaufen und gelangt durch die Auslaßöffnung 5 wieder in die Garraummuffel 2. Das Kondensat-Leitblech 17 führt aufgrund seiner Neigung das Kondensat zur Rückseite der Tür 12 und verhindert so das Abtropfen.

Innerhalb des Luftkanals 10 kann eine U-förmige Leitwand 14 eingesetzt sein, welche evtl. aus den Öffnungen 7 in den Luftkanal 10 gelangenden Dampf zu einem längeren Strömungsweg zwingt und das direkte Austreten zur Herdvorderseite hin verhindert.

Der zur Steuerung der Dampfleistung benötigte und durch die Öffnung 5 austretende Dampf wird zwar auf diese Weise ausreichend verdünnt und abgekühlt, nicht aber der im Garraum am Garende noch vorhandene Dampf. Hierzu sind zwei weitere Öffnungen vorgesehen, welche programmabhängig verschließbar sind. Die Dampfaustrittsöffnung 18 mit der über 21 gesteuerten Verschlußeinrichtung 20 mündet in der Rückführungsleitung 13 und die Luftzuführungsöffnung 19 mit der über 22 gesteuerten Verschlußeinrichtung 20 ist an den Druckkanal 24 angeschlossen, so daß Frischluft aus dem Druckkanal in den Garraum einströmen kann.

Die Wirkungsweise der Vorrichtung ist folgende :
Die Dampfaustrittsöffnung 18 und die Luftzuführungsöffnung 19 mit ihren Verschlußeinrichtung 20-22 sind normalerweise ständig geschlossen. Sie werden lediglich in der Endphase des Dampfgarens geöffnet. Dann strömt Dampf durch 18 aus dem Garraum 2 in die Rückführungsleitung 13 des Gebläses 11. Hier erfolgt die Vermischung mit Luft, das Dampf-Luft-Gemisch strömt durch den Druckkanal 24 und tritt an der Gerätevorderseite aus, während gleichzeitig Frischluft durch 19 aus dem Druckkanal 24 einströmt. Da in dieser Phase der Dampferzeuger abgeschaltet ist, wird bis zum tatsächlichen Programmende der in der Backofenmuffel befindliche Dampf so weit abgebaut, daß beim Öffnen der Backofentür kaum noch Dampf austritt.

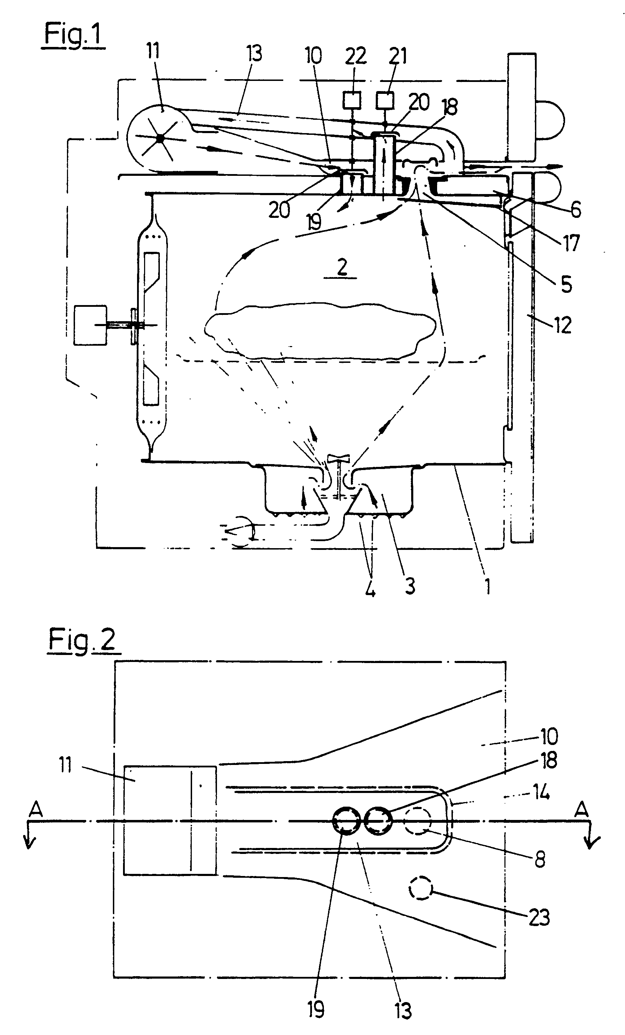

Die Öffnung 5 (Fig. 1 u. 3) ist ständig offen. Durch sie strömt der Steuerdampf gegen den Dampfthermostaten. Außerdem verhindert sie das Entstehen eines nennenswerten Überdruckes. Die in Fig. 2 dargestellte weitere Öffnung 23 ist konstruktiv ähnlich aufgebaut wie die Öffnungen 18 u. 19. Durch sie soll der Wrasen entweichen. Sie ist bei Dampfbetrieb geschlossen, aber bei Betrieb des Garraumes mit umgewälzter Heißluft oder bei elektr. Widerstandsbeheizung geöffnet damit der Wrasen bei diesen Betriebsweisen entweichen kann.

## Patentansprüche

1. Vorrichtung zur Steuerung eines mit in einen Garraum (2) eintretendem Wasserdampf betriebenen Gargerätes mit einer Öffnung (5) zum Austritt von Dampf in der Backofendecke (6), einer Rückführleitung (13), durch welche der austretende Dampf in den Unterdruckbereich eines Gebläses (11) geleitet und dort mit der übrigen vom Gebläse aus einem Druckkanal (24) angesaugten Kühlluft vermischt und über einen Luftkanal (10) abgeleitet wird, dadurch gekennzeichnet, daß die Rückführleitung (13) über eine verschließbare Dampfaustrittsöffnung (18) und der Luftkanal (10) über eine verschließbare Luftzuführungsöffnung (19) mit dem Garraum (2) verbindbar sind.

2. Vorrichtung nach Anspruch 1 dadurch gekennzeichnet, daß eine verschließbare Wrasenaustrittsöffnung (23) im Kühlluftstrom mündet.

3. Vorrichtung nach eine der Ansprüche 1 und/oder 2 dadurch gekennzeichnet, daß in der Garraumwandung eine Auslaßöffnung (5) vorgesehen ist, welche zu einer einen Temperaturfühler (9) tragenden Hülse (8) mit seitlichen Öffnungen (7) führt, die in dem von der Umlenkwand (14) gebildeten Übergangsbereich zwischen dem Luftkanal (10) und der Rückführleitung (13) liegt.

4. Verfahren zum Betreiben eines Gargerätes nach den Ansprüchen 1 bis 3 dadurch gekennzeichnet, daß
a) bei Dampfbetrieb gegen Ende des Garprogrammes sowohl die Dampfaustrittsöffnung (18) als auch die Lufzuführungsöffnung (19) mittels der Verschlußeinrichtung (20, 21, 22) geöffnet werden, sodaß Dampf aus dem Garraum in die Rückführleitung (13) gelangt, mit Luft vermischt und durch den Druckkanal an der Gerätevorderseite austritt, während über die Luftzuführungsöffnung (19) Luft in den Garraum einströmt,
b) bei Nicht-Dampfbetrieb die Dampfaustrittsöffnung (18) und die Luftzuführungsöffnung (19) geschlossen, aber die Wrasenaustrittsöffnung (23) geöffnet ist.

## Claims

1. Device for controlling a cooking appliance, which is operated by steam entering a cooking chamber (2), and which has an opening (5) for the escape of steam in the oven ceiling (6), a return line (13) through which the escaping steam is led into the underpressure region of a blower (11), and is mixed there with the remaining cooling air drawn in by the blower from a pressure duct (24), and is discharged via an air duct (10), characterised in that the return line (13) can be connected to the cooking chamber (2) via a sealable steam escape opening (18), and the air duct (10) can be connected to the cooking chamber (2) via a sealable air feed opening (19).

2. Device according to Claim 1, characterised in that a sealable water vapour opening (23) opens into the cooling air stream.

3. Device according to one of Claims 1 and/or 2, characterised in that an outlet opening (5) is provided in the cooking chamber wall, which opening leads to a sleeve (8) with lateral openings (7) that supports a temperature sensor (9) and is situated in the transition region, formed by the deflecting wall (14), between the air duct (10) and the return line (13).

4. Method of operating a cooking appliance according to Claims 1 to 3, characterised in that
a) towards the end of the cooking programme during steam operation both the steam escape opening (18) and the air feed opening (19) are opened by means of the sealing device (20, 21, 22), so that steam passes from the cooking chamber into the return line (13), mixes with air, and escapes through the pressure duct on the front side of the appliance, while air flows into the cooking chamber via the air feed opening (19),
b) during operation without steam the steam escape opening (18) and the air feed opening (19) are closed, but the water vapour opening (23) is open.

EP 0 319 673 B1

## Revendications

1. Dispositif de commande d'un appareil de fermentation (2), fonctionnant à la vapeur d'eau introduite dans une enceinte de fermentation, comportant une ouverture (5) pour la sortie de la vapeur ménagée dans le plafond (6), une conduite de retour (13), grâce à laquelle la vapeur qui sort est dirigée vers la zone de dépression d'une soufflante (11) et y est mélangée au reste de l'air de refroidissement aspiré par la soufflante, dans une conduite de pression (24), et évacuée par une conduite d'air (10), caractérisé en ce que la conduite de retour (13) et la conduite d'évacuation d'air (10) sont susceptibles d'être reliées à l'enceinte de fermentation (2), respectivement par une ouverture de sortie de vapeur (18) obturable, et par l'intermédiaire d'une ouverture d'amenée d'air (19) obturable.

2. Dispositif selon la revendication 1, caractérisé en ce qu'une ouverture de sortie de buées (23) obturable débouche dans la veine d'air de refroidissement.

3. Dispositif selon la revendication 1 et/ou 2, caractérisé en ce que, dans la paroi de l'enceinte de fermentation, est prévue une ouverture d'échappement (5) qui mène à une douille (8), qui porte une sonde de température (9) et présente des ouvertures latérales (7) et est située dans la zone de transition formée par la paroi de déviation (14), entre la conduite d'évacuation d'air (10) et la conduite de retour (13).

4. Procédé de fonctionnement d'un dispositif de fermentation selon les revendications 1 à 3, caractérisé en ce que :

a) lors du fonctionnement avec la vapeur, vers la fin du programme de fermentation, tant l'ouverture de sortie de vapeur (18) qu'également l'ouverture d'amenée d'air (19) sont ouvertes au moyen du dispositif d'obturation (20, 21, 22), de façon que de la vapeur, sortant de l'espace de fermentation, pénètre dans la conduite de retour (13), se mélange à de l'air et sorte par le canal de pression, en face avant de l'appareil, tandis que l'ouverture d'amenée d'air (19) introduit de l'air dans l'enceinte de fermentation,

b) en cas de non-fonctionnement, l'ouverture de sortie de vapeur (18) et l'ouverture d'amenée d'air (19) sont fermées, mais l'ouverture de sortie de buées (23) étant ouverte.

4

## Fig.1

## Fig.2

Fig. 3